# EUROPÄISCHE PATENTSCHRIFT

(11) **EP 2 615 014 B1**
(45) Veröffentlichungstag und Bekanntmachung des Hinweises auf die Patenterteilung: **03.03.2021**
(21) Anmeldenummer: 13150840.0
(22) Anmeldetag: 10.01.2013
(51) Int. Cl.: B62D 33/06, B62D 63/02

(54) **Verfahren zum Herstellen eines Fahrerhauses für ein Kraftfahrzeug**
Method of manufacturing a driver's cab for a vehicle
Procédé de fabrication d'une cabine de conduite pour un véhicule

(30) Priorität: 13.01.2012 DE 102012000542
(43) Veröffentlichungstag der Anmeldung: 17.07.2013
(73) Patentinhaber: Engineering Center Steyr GmbH & Co KG, 4300 St. Valentin (AT)
(72) Erfinder: Ebmer, Andreas, 4483 Hargelsberg (AT); Beer, Friedrich, 4540 Bad Hall (AT)
(74) Vertreter: Rausch, Gabriele

(56) Entgegenhaltungen:
- WO-A1-2005/061314
- WO-A1-2006/071160
- DE-A1-102007 024 804
- DE-T2-602005 002 893
- US-A1- 2009 256 392

## Beschreibung

Die Erfindung betrifft ein Verfahren zum Herstellen eines Fahrerhauses für ein Kraftfahrzeug, wobei das Fahrerhaus ein Tragmodul und ein Dachmodul aufweist, wobei das Tragmodul und das Dachmodul separate Baueinheiten bilden, die aneinander befestigt sind.

Für Kraftfahrzeuge, insbesondere für Nutzfahrzeuge, ist es bekannt, ein Fahrerhaus gesondert von einem Fahrgestell zu fertigen und das Fahrerhaus erst in einem späteren Schritt an dem Fahrgestell zu befestigen. Als Fahrerhaus wird dabei das Gehäuse bezeichnet, das denjenigen Raum umgibt, in dem ein Fahrer und gegebenenfalls Mitfahrer während einer Fahrt des Fahrzeugs sitzen (Fahrgastzelle). Boden, Dach und Wände des Fahrerhauses können aus einer Vielzahl verschiedener Materialien wie z.B. Blechen geformt sein. Im Stand der Technik sind selbsttragende Fahrerhäuser bekannt, die aus einem Pressstahlgerippe aufgebaut sind, das mit Stahlblechen verkleidet ist. Bei einer alternativen Konstruktionsweise werden zunächst Rahmen für Seiteneingänge des Fahrerhauses gefertigt, die dann mit einer Bodenplatte und einem Dach verschweißt werden. Neben Metallen kommen vermehrt auch Kunststoffe, insbesondere für nicht tragende Teile, zur Verwendung.

Von der Art der Konstruktion eines Fahrerhauses hängt ganz wesentlich die Sicherheit von Insassen in dem Fahrerhaus ab. Ein dem Fahrerhaus zugrundeliegendes Grundgerüst muss daher besonders stabil ausgebildet sein, auch weil um Fahrerhäuser herum, insbesondere bei Frontlenkern, kaum Raum für Knautschzonen ist.

Da Fahrerhäuser den Raum darstellen, in dem sich während der Fahrt Menschen aufhalten, werden Fahrerhäuser mit vielfältiger Ausstattung versehen. Das betrifft zum einen die für die Lenkung des jeweiligen Kraftfahrzeugs notwendigen Steuereinrichtungen und Elektronik, zum anderen aber auch auf den Komfort ausgerichtete Ausstattung. Neben Sitzen aller Art, Heizungen und Klimaanlagen können z.B. auch Betten vorgesehen sein, weil das Fahrerhaus insbesondere bei Lastkraftwagen im Fernverkehr auch als Pausen- und/oder Ruhebereich genutzt wird.

Ein Problem bei der Fertigung von Fahrerhäusern für Kraftfahrzeuge, die mit zahlreichen, zum Teil aufwendigen Ausstattungselementen versehen werden, besteht darin, dass ein vollständig aufgebautes Fahrerhaus einen räumlich sehr eingeschränkten Bereich darstellt, dessen Zugang durch die verbleibenden Öffnungen hindurch erschwert ist. Zum Einbringen verschiedenster Ausstattungselemente müssen diese Elemente nicht nur an den Platz, den sie einnehmen sollen, sondern auch an die räumlichen Gegebenheiten beim Einbau angepasst sein.

Aus EP 0 399 648 B1 ist es bekannt, ein Fahrerhaus für ein Fahrzeug aus zwei Modulen aufzubauen, um vor dem Befestigen der beiden Module aneinander Innenraumkomponenten zu installieren. Die Trennlinie zwischen den beiden Modulen verläuft dabei, von einer Seite des Fahrerhauses aus betrachtet, diagonal von der in Fahrtrichtung vorderen Seite einer Bodenplatte zu der in Fahrtrichtung hinteren Seite eines Daches des Fahrerhauses, also von vorne unten nach hinten oben. Der Zusammenbau eines Fahrerhauses durch das Befestigen zweier oder mehr Module aneinander kann jedoch im Hinblick auf die Sicherheit des Fahrerhauses, die gerade von der Stabilität des Fahrerhauses oder zumindest eines Grundgerüsts des Fahrerhauses abhängt, von wesentlicher Bedeutung sein.

Aus der WO 2006/071160 A1 ist ein Fahrerhaus bekannt, das auf einen Stahlrahmen basiert, der mit Bauteilen verplankt wird. Die tragende Struktur wird über Streben hergestellt.

Aus der DE 10 2007 024 804 A1 ist ein Fahrzeug bekannt, bei dem Strukturmodule an einer Rohbaukarosseriestruktur nämlich einer Rahmenstruktur befestigt sind.
Die DE 10 2007 024804 A1 offenbart ein Verfahren zum Herstellen eines Fahrerhauses für ein Kraftfahrzeug.

Das Fahrerhaus weist ein Tragmodul und ein Dachmodul auf.

Das Tragmodul umfasst einen Bodenabschnitt der die Unterseite des Fahrerhauses bildet mit einer Befestigungseinrichtung zum Befestigen des Tragmoduls an einem Fahrgestell des Kraftfahrzeugs; einen mit dem Bodenabschnitt verbundenen Vorderwandabschnitt, der in Wesentlichen vertikal ausgerichtet ist; zwei mit dem Vorderwandabschnitt verbundene A-Säulen; einen mit den A-Säulen verbundenen vorderen Dachholm; zwei mit dem Bodenabschnitt verbundene B-Säulen; und zwei seitliche Dachholme, wobei jeder seitliche Dachholm eine der A-Säulen und eine der B-Säulen miteinander verbindet.

Das Dachmodul umfasst einen Dachabschnitt und einen Rückwandabschnitt.
Aus der EP 0 399 648 A1 ist der Aufbau eines Fahrzeugs bekannt, bei dem Bauteilgruppen aus Metall oder Kunststoff vorgefertigt sind. Dabei können größere Einheiten wie Front und Dach sowie Unterboden und Rückwand einstückig hergestellt sein.

Es ist daher eine Aufgabe, ein Fahrerhaus für ein Kraftfahrzeug zu schaffen, das einerseits auf Kosten sparende sowie einfache Weise hergestellt und mit Ausstattungselementen versehen werden kann und andererseits zugleich für darin befindliche Fahrer oder Beifahrer besonders sicher ist.

Diese Aufgabe wird durch ein Verfahren zum Herstellen eines Fahrerhauses mit den Merkmalen des Anspruchs 1 gelöst.

Das Fahrerhaus ist aus zwei Modulen aufgebaut, einem so genannten Tragmodul und einem so genannten Dachmodul. Als Modul wird hier eine jeweilige separat vormontierte Baueinheit bezeichnet, wobei verschiedene Abschnitte und Elemente eines jeweiligen Moduls mit anderen Abschnitten und Elementen dieses selben Moduls fest verbunden, vorzugsweise integral ausgebildet oder unlösbar verbunden sind. Als solche miteinander fest verbundenen Abschnitte und Elemente umfasst das Tragmodul zumindest einen Bodenabschnitt, einen Vorderwandabschnitt, zwei A-Säulen und zwei B-Säulen sowie einen vorderen und zwei seitliche Dachholme. Der Vorderwandabschnitt stellt die so genannte Spritzwand des Fahrerhauses dar, außerdem bildet er mit den A-Säulen und dem vorderen Dachholm (so genannter Windlauf) die Öffnung für eine Windschutzscheibe. Von beiden Seiten des Bodenabschnitts erstrecken sich jeweils eine A-Säule und eine B-Säule im Wesentlichen senkrecht in die Höhe, die an ihren oberen Enden durch einen jeweiligen seitlichen Dachholm verbunden sind und auf diese Weise eine jeweilige Öffnung für eine jeweilige Tür des Fahrerhauses bilden.

Das Tragmodul stellt die tragende Einheit des Fahrerhauses dar und ist auch ohne daran befestigtes Dachmodul stabil, d.h. es bildet nach vorne und zu den Seiten eine auf einer Bodenplatte ruhende Fahrgastzelle. Das Dachmodul kann auf das Tragmodul aufgesetzt oder auf andere Weise angebracht werden und wird dann an dem Tragmodul befestigt. Die Befestigung von Tragmodul und Dachmodul aneinander kann dabei auf jede mögliche Weise erfolgen, z.B. durch Kleben, Schweißen, Vernieten und/oder Verschrauben.

Als untereinander fest, vorzugsweise unlösbar miteinander verbundene Elemente umfasst das Dachmodul zumindest einen Dachabschnitt und einen Rückwandabschnitt, sowie optional weitere Abschnitte wie nachstehend erläutert. Der Bodenabschnitt und der Dachabschnitt des Fahrerhauses sind im Wesentlichen horizontal ausgerichtet, müssen jedoch nicht zwangsläufig flach sein sondern können Wölbungen, Profile oder andere Verformungen aufweisen. Der Vorderwandabschnitt und der Rückwandabschnitt des Fahrerhauses sind im Wesentlichen vertikal ausgerichtet und somit im Wesentlichen senkrecht zum Bodenabschnitt und Dachabschnitt angeordnet.

Das genannte Fahrerhaus ist insbesondere für Lastkraftwagen und andere Nutzfahrzeuge vorgesehen. Die Befestigung des Fahrerhauses an einem Fahrgestell des Kraftfahrzeugs erfolgt über eine Befestigungseinrichtung an dem Bodenabschnitt des Tragmoduls des Fahrerhauses. Die Befestigungseinrichtung kann beispielsweise Befestigungsvorsprünge (z.B. Zapfen), Befestigungsvertiefungen (z.B. für eine formschlüssige Verbindung) und/oder Befestigungsöffnungen (z.B. für eine Schraubverbindung) umfassen. Der Bodenabschnitt des Tragmoduls, der die Unterseite des Fahrerhauses bildet, kann beispielsweise über eine Fahrerhausaufhängung (z.B. mit einer Federdämpfereinrichtung) an Längsträgern des Fahrgestells befestigt werden. Der Bodenabschnitt kann dabei für verschiedene Typen von Kraftfahrzeugen speziell ausgebildet sein. Z.B. kann ein Bodenabschnitt speziell zur Befestigung an Frontlenker oder speziell zur Befestigung an Haubenfahrzeuge ausgebildet sein. Es kann zudem vorteilhaft sein, das Tragmodul selbst modular zu fertigen und beispielsweise gleichartige Vorderwandabschnitte mit verschiedenen, für verschiedene Fahrzeugtypen angepassten Bodenabschnitten zu verbinden.

Die Modulbauweise des Fahrerhauses vereinfacht die Installation von Ausstattungselementen in den jeweiligen Modulen, da, solange das Dachmodul noch nicht an dem Tragmodul befestigt ist, alle Bereiche des späteren Fahrerhauses gut zugänglich sind. Außerdem ermöglicht die Modulbauweise eine einfache Anpassung der Größe, Bauform und Ausstattung des Fahrerhauses beispielsweise gemäß den Wünschen unterschiedlicher Kunden. Als ein Baukastensystem mit verschiedenen Tragmodulen und/oder verschiedenen Dachmodulen betrachtet, die beliebig miteinander kombiniert werden können, ermöglicht es die Modulbauweise, zu einem bestimmten Tragmodul oder Dachmodul kostengünstig verschiedene individuelle Ausführungen des jeweiligen anderen Moduls anzubieten. So kann z.B. zu einem Tragmodul, das auf einen bestimmten Fahrgestelltyp passt, eine Vielzahl verschiedener Dachmodule vorgesehen sein; umgekehrt kann ein auf ein bestimmtes Erscheinungsbild ausgerichtetes Dachmodul an verschiedenen Tragmodulen zur Anbringung an verschiedene Fahrgestelltypen befestigt werden.

Im Hinblick auf die Sicherheit der Fahrgastzelle bildet das Tragmodul als fertige Baueinheit das wesentliche stabilisierende Grundgerüst. Das Tragmodul kann daher unabhängig vom Dachmodul auf eine hohe Stabilität und Sicherheit hin entworfen sein, insbesondere hinsichtlich der Fahrtrichtung und zu den Seiten. Das Tragmodul wird mittels der Befestigungseinrichtung unmittelbar oder über eine Fahrerhausaufhängung an dem Fahrgestell des Kraftfahrzeugs befestigt. Da der Vorderwandabschnitt, die A-Säulen und B-Säulen sowie der Bodenabschnitt des Tragmoduls fest miteinander verbunden sind und der Bodenabschnitt stabil an dem Fahrgestell befestigt ist, leistet die Stabilität dieser Baueinheit einen wesentlichen Beitrag zur Sicherheit der Fahrgäste bei einem Frontalzusammenstoß oder Seitenaufprall.

Für das Befestigen des Tragmoduls und des Dachmoduls eines Fahrerhauses aneinander werden vorzugsweise der Dachabschnitt des Dachmoduls an dem vorderen Dachholm und an den seitlichen Dachholmen des Tragmoduls und der Rückwandabschnitt des Dachmoduls an dem Bodenabschnitt des Tragmoduls befestigt. Das Tragmodul kann einen Rückwandergänzungsabschnitt aufweisen, bei dem es sich um einen im Wesentlichen senkrecht zum Bodenabschnitt ausgerichteten und mit dem Bodenabschnitt verbundenen Teil einer Rückwand des Fahrerhauses handelt. Ist ein solcher Rückwandergänzungsabschnitt vorgesehen, ist der Rückwandabschnitt des Dachmoduls an diesem Rückwandergänzungsabschnitt anstelle des Bodenabschnitts des Tragmoduls befestigt. Der Rückwandergänzungsabschnitt des Tragmoduls und der Rückwandabschnitt des Dachmoduls bilden dann zusammen die Rückwand des Fahrerhauses. Ein derartiger Aufbau, bei dem das Tragmodul einen Teil der Rückwand des Fahrerhauses umfasst, kann für die Stabilität des Fahrerhauses von Vorteil sein.

In einer vorteilhaften Ausführungsform weist das Dachmodul zusätzlich zu dem Dachabschnitt und dem Rückwandabschnitt zwei Seitenwandabschnitte auf, die mit dem Dachabschnitt und dem Rückwandabschnitt des Dachmoduls fest verbunden sind. Für das Befestigen des Dachmoduls an das Tragmodul können die Seitenwandabschnitte an einer jeweiligen B-Säule und an dem Bodenabschnitt des Tragmoduls befestigt werden.

Derartige Seitenwandabschnitte müssen jedoch nicht unbedingt Bestandteile des Dachmoduls sein. Alternativ können die Seitenwandabschnitte nämlich auch vom Dachmodul oder Tragmodul unabhängige Bauteile sein und als solche an dem Dachmodul (Dachabschnitt und Rückwandabschnitt) und/oder an dem Tragmodul (Bodenabschnitt und jeweilige B-Säule) befestigt werden. Die Befestigung derartiger separater Seitenwandabschnitte kann vor oder nach der Befestigung von Tragmodul und Dachmodul aneinander erfolgen.

Vorzugsweise ist das Dachmodul zumindest mit einer Korrosionsschutzschicht und einer Decklackschicht und/oder Dekorfolie versehen. Bevorzugt ist außerdem, dass das Tragmodul zwar mit einer Korrosionsschutzschicht versehen ist, jedoch weder eine Decklackschicht noch eine Dekorfolie aufweist. Bei der erfindungsgemäßen Unterteilung des Fahrerhauses in ein Tragmodul und ein Dachmodul können nämlich sichtbare Abschnitte des Tragmoduls leicht auf andere Weise verdeckt werden, so dass auf eine Decklackierung ebenso wie auf das Aufbringen einer Dekorfolie und den hiermit verbundenen Aufwand verzichtet werden kann. Die Korrosionsschutzbehandlung der Module kann z.B. durch Kataphorese erfolgen.

Besonders vorteilhaft ist es beispielsweise, wenn das Tragmodul mit Außenbauteilen versehen ist, die zumindest eine jeweilige Außenseite des Vorderwandabschnitts, der A-Säulen und der B-Säulen des Tragmoduls verdecken. Zudem kann eine Innenverkleidung des Vorderwandabschnitts, der A-Säulen und der B-Säulen vorgesehen sein. Somit kann erreicht werden, dass das Tragmodul von vorne und von den Seiten, zumindest bei Betrachtung von außen und bevorzugt auch von innen, nicht zu sehen ist, sondern durch Außenbauteile und/oder Innenverkleidungen verdeckt ist. Auf die Aufbringung einer Decklackschicht oder einer Dekorfolie auf das Tragmodul, wie sie ansonsten aus ästhetischen Gründen erforderlich wäre, kann deshalb verzichtet werden. So können Kosten bei der Herstellung vermieden werden.

Außerdem ist es durch die Wahl verschiedener Außenbauteile und/oder Innenverkleidungen möglich, das Tragmodul bezüglich seiner äußeren Erscheinung variabel zu gestalten.

Vorzugsweise sind der Dachabschnitt, der Rückwandabschnitt und/oder, sofern vorhanden, die Seitenwandabschnitte des Dachmoduls nach Art einer SandwichBauweise hergestellt, d.h. der Dachabschnitt, der Rückwandabschnitt und/oder die Seitenwandabschnitte umfassen eine Innenschicht, eine Außenschicht und einen zwischen der Innenschicht und der Außenschicht angeordneten Kern. Der Kern kann beispielsweise aus Hartschaum sein. Die Innenschicht und die Außenschicht, die an dem Kern angeordnet sind, können beispielsweise gegossen oder gepresst, aus Kunststoff oder Blech sein. Aufgrund der erfindungsgemäßen Unterteilung des Fahrerhauses in das Tragmodul und das Dachmodul kann somit für den Dachabschnitt und/oder für den Rückwandabschnitt des Dachmoduls eine inhärente thermische Isolierung herbeigeführt werden. Daher kann auf zusätzliche Isoliermaßnahmen an der Innenseite des Dachmoduls verzichtet werden. Die Innenseite des Dachmoduls kann eine Innenraumverkleidung aufweisen, die fest mit dem Dachmodul verbunden ist und mehrteilig sein kann. Die Innenraumverkleidung kann aus Kunststofffolien und/oder Textilelementen bestehen.

Die Erfindung bezieht sich auch auf ein Fahrerhaus-Modulsystem, das zumindest ein Tragmodul und ein Dachmodul eines wie oben beschriebenen Fahrerhauses umfasst, wobei das Modulsystem wenigstens ein weiteres Dachmodul umfasst, das anstelle des genannten Dachmoduls an dem genannten Tragmodul befestigbar ist, und/oder wobei das Modulsystem wenigstens ein weiteres Tragmodul umfasst, an dem das genannte Dachmodul anstelle des genannten Tragmoduls befestigbar ist. Zu einem Dachmodul können also mehrere verschiedene Tragmodule vorgesehen sein, die z.B. für verschiedene Kraftfahrzeugtypen wie Frontlenker und Haubenfahrzeuge geeignet sind. Besonders bevorzugt ist es umgekehrt, zu einem Tragmodul mehrere verschiedene Dachmodule vorzusehen. Denn während die Tragmodule gemäß einer vorteilhaften Ausführungsform verdeckt, also nicht sichtbar sind und daher nur an ein jeweiliges Fahrgestell, aber nicht in ihrem Erscheinungsbild angepasst zu werden brauchen, können zu diesem jeweiligen Tragmodul für verschiedene Einsatzzwecke und/oder für unterschiedliche Kunden ganz verschiedene Dachmodule bereitgestellt werden. Als verschiedene Ausführungen für ein Dachmodul sind beispielsweise die Anbringung eines aerodynamischen Elements (Spoiler), ein besonders niedriges oder abgeschrägtes Dach, wie beispielsweise für einen Autotransporter, oder ein Hochdach denkbar. Somit ermöglicht das Fahrerhaus-Modulsystem eine große Variabilität und Individualität bei gleichzeitig vergleichsweise geringen Kosten.

Die Erfindung betrifft ein Verfahren zum Herstellen eines Fahrerhauses, das das Vormontieren eines Tragmoduls, das Installieren von ersten Ausstattungselementen an dem Tragmodul, das Vormontieren eines Dachmoduls, das Installieren von zweiten Ausstattungselementen an dem Dachmodul sowie das anschließende Befestigen des Dachmoduls an dem Tragmodul umfasst. Dadurch, dass die Installation von ersten und zweiten Ausstattungselementen an dem Tragmodul bzw. dem Dachmodul vor dem Befestigen des Dachmoduls an dem Tragmodul erfolgt, ist der Einbau der genannten Ausstattungselemente aufgrund des noch nicht zu einer Einheit geschlossenen Fahrerhauses wesentlich vereinfacht.

Die ersten Ausstattungselemente umfassen, ohne darauf eingeschränkt zu sein, beispielsweise eine Klimaanlage, eine Ventilation, eine Heizung, ein Armaturenbrett, eine Lenkung, Sitze und/oder einen Bodenbelag, die jeweils an das Tragmodul angebracht werden können. Zweite Ausstattungselemente zur Installation an dem Dachmodul sind ohne Einschränkung beispielsweise eine Dachluke, ein Bett, Beleuchtungselemente und/oder Ablageelemente.

Bevorzugt wird das Tragmodul vor dem Installieren der ersten Ausstattungselemente einer Korrosionsschutzbehandlung unterzogen, jedoch weder mit einer Decklackierung noch mit einer Dekorfolie versehen. Auf die Decklackierung und das Aufbringen einer Dekorfolie kann insbesondere bei Anbringung von Außenbauteilen an das Tragmodul verzichtet werden. Außerdem ist es bevorzugt, dass vor dem Installieren zweiter Ausstattungselemente das Dachmodul zumindest mit einer Korrosionsschutzbehandlung und einer Decklackierung und/oder Dekorfolie versehen wird.

Vorteilhafte Ausführungsformen der Erfindung sind in den abhängigen Ansprüchen beschrieben.

Die Erfindung wird nachfolgend lediglich beispielhaft unter Bezugnahme auf die Figuren erläutert.
Fig. 1a und 1b: zeigen in einer schematischen Darstellung eine jeweilige Ausführungsform eines Tragmoduls eines Fahrerhauses.
Fig. 2a und 2b: zeigen ein jeweiliges Tragmodul aus Fig. 1a bzw. 1b mit installierten ersten Ausstattungselementen.
Fig. 3a bis 3f: zeigen in einer schematischen Darstellung eine jeweilige Ausführungsform eines Dachmoduls eines Fahrerhauses.
Fig. 4a und 4b: zeigen zwei Ausführungsformen eines Fahrerhauses mit einem jeweiligen Tragmodul aus Fig. 1a bzw. 1b und einem jeweiligen Dachmodul aus Fig. 3a.

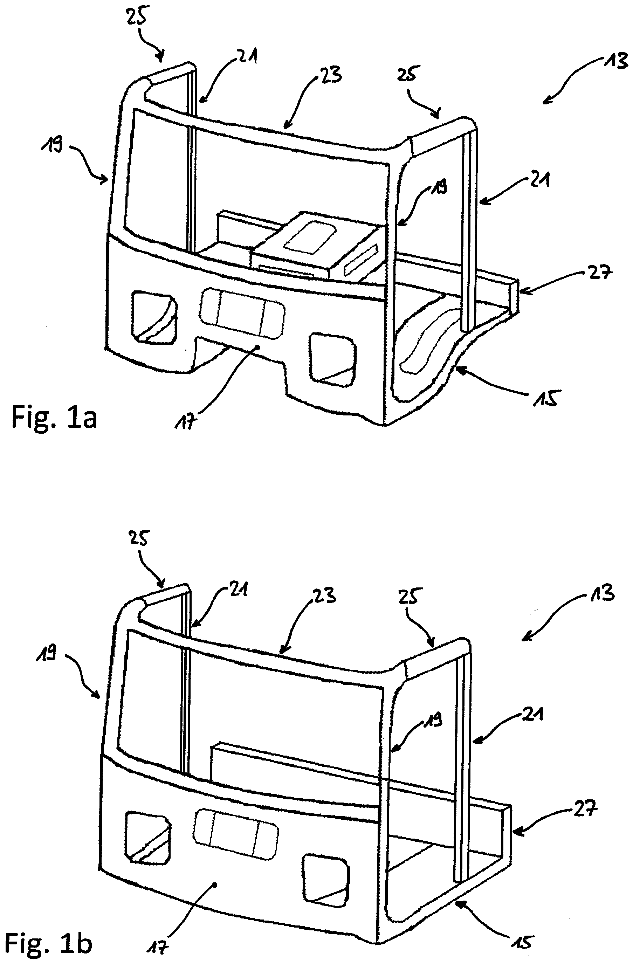

In Fig. 1a und 1b sind zwei Ausführungsformen eines Tragmoduls 13 eines Fahrerhauses dargestellt, die jeweils einen Bodenabschnitt 15, einen Vorderwandabschnitt 17, zwei A-Säulen 19 und zwei B-Säulen 21 sowie einen vorderen Dachholm 23 und zwei seitliche Dachholme 25 aufweisen. Das Tragmodul 13 besitzt somit die Struktur einer stabilen Fahrgastzelle. Die beiden gezeigten Ausführungsformen unterscheiden sich insbesondere in der Form des Bodenabschnitts 15, die an den Typ des Kraftfahrzeugs angepasst ist, an dessen Fahrgestell das Tragmodul 13 befestigt werden soll. Fig. 1a zeigt ein Tragmodul 13 für einen Frontlenker, Fig. 1b zeigt ein Tragmodul 13 für ein Fahrerhaus mit einem ebenen Boden, beispielsweise für ein Haubenfahrzeug. Die Befestigungseinrichtung zum Befestigen des Tragmoduls 13 an einem Fahrgestell des Kraftfahrzeugs und das Fahrgestell selbst sind in den Figuren nicht gezeigt.

Die Fig. 1a und 1b veranschaulichen die Anordnung von Bodenabschnitt 15, Vorderwandabschnitt 17, A-Säulen 19, B-Säulen 21, vorderem Dachholm 23 und seitlichen Dachholmen 25 zueinander. Es ist zu erkennen, dass der Vorderwandabschnitt 17, die A-Säulen 19 und der vordere Dachholm 23 eine Öffnung für eine nicht gezeigte Windschutzscheibe bilden. Eine A-Säule 19, eine B-Säule 21 und ein seitlicher Dachholm 25 bilden jeweilige Öffnungen für ebenfalls nicht gezeigte Türen des Fahrerhauses. Der Vorderwandabschnitt 17 kann wie gezeigt verschiedene weitere Öffnungen des Fahrerhauses aufweisen, die zur Durchleitung verschiedener in oder an dem Fahrerhaus anzubringender Bauteile oder Ausstattungselemente geeignet sein können.

Die in Fig. 1a und 1b gezeigten Ausführungsformen weisen außerdem einen jeweiligen Rückwandergänzungsabschnitt 27 auf, der senkrecht an einer Rückseite des Bodenabschnitts 15 mit dem Bodenabschnitt 15 verbunden ist.

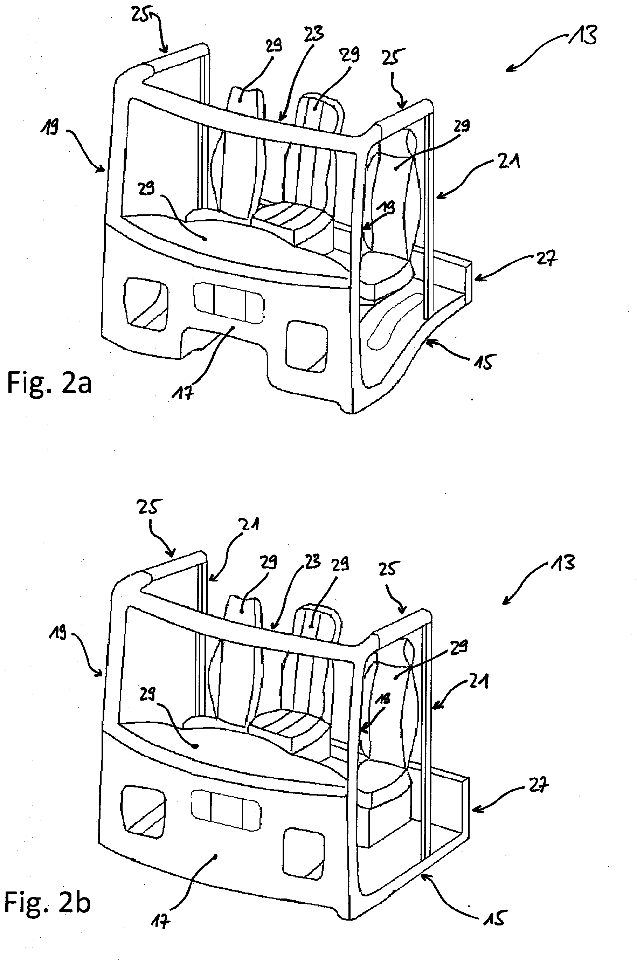

In Fig. 2a und 2b sind die in Fig. 1a und 1b gezeigten Ausführungsformen mit einigen installierten ersten Ausstattungselementen 29 dargestellt. Es handelt sich bei den hier gezeigten ersten Ausstattungselementen 29 jeweils um drei Sitze für Fahrer und Beifahrer sowie ein Armaturenbrett. Die ersten Ausstattungselemente 29 sind jedoch nicht auf Sitze oder Armaturenbretter beschränkt. Wie gezeigt, sind die Sitze und das Armaturenbrett in dem Tragmodul 13 installiert, bevor ein Dachmodul 31 an dem Tragmodul 13 befestigt wird. Bis dahin nämlich ermöglicht die große Öffnung des Tragmoduls 13 nach oben und zur Rückseite des Tragmoduls 13 hin eine gute Zugänglichkeit zu allen Bereichen des zukünftigen Innenraums des Fahrerhauses und vereinfacht so die Installation der ersten Ausstattungselemente 29.

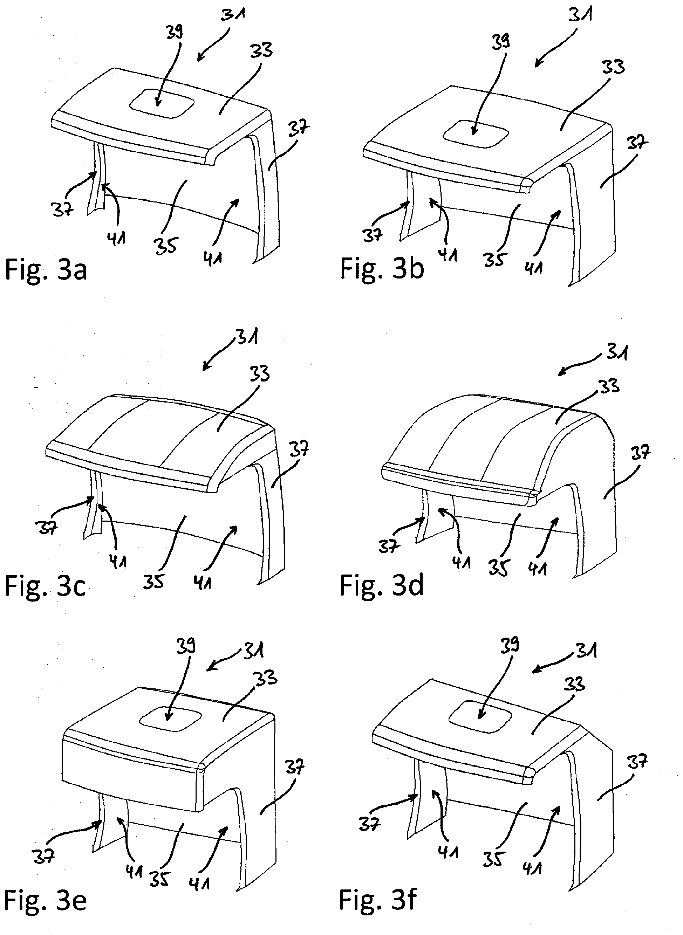

In Fig. 3a bis 3f sind verschiedene Ausführungsformen jeweiliger Dachmodule 31 eines Fahrerhauses für ein Kraftfahrzeug dargestellt. Die Dachmodule 31 weisen jeweils einen Dachabschnitt 33 und einen Rückwandabschnitt 35 auf. Die in Fig. 3a bis 3f gezeigten Dachmodule 31 weisen zudem jeweilige Seitenwandabschnitte 37 auf. Die gezeigten Dachabschnitte 33, Rückwandabschnitte 35 und/oder Seitenwandabschnitte 37 weisen jeweilige Innenraumverkleidungen 41 auf (z.B. Kunststofffolien und/oder Textilelemente), die mit der Innenseite des jeweiligen Abschnitts 33, 35, 37 des Dachmoduls 31 fest verbunden sind.

Die in Fig. 3a bis 3f gezeigten Ausführungsformen unterscheiden sich in ihren Ausmaßen und ihrer Ausgestaltung. So sind die in Fig. 3a und 3c gezeigten Dachmodule 31 für kürzere Fahrerhäuser gedacht als die in Fig. 3b, 3d, 3e und 3f gezeigten Dachmodule 31. Die Ausgestaltung der Dachmodule 31 variiert und kann wie hier exemplarisch gezeigt als Niederdach (Fig. 3a und 3b), als Hochdach (Fig. 3e), als aerodynamisches Dach (Fig. 3c und 3d) oder als Sonderbauform mit abgeschrägter Hinterkante (Fig. 3f) beispielsweise für einen Autotransporter vorliegen.

Zweite Ausstattungselemente 39, wie die in Fig. 3a, 3b und 3e gezeigte Dachluke, werden an dem jeweiligen Dachmodul 31 installiert, bevor das Dachmodul 31 an ein Tragmodul 13 befestigt wird.

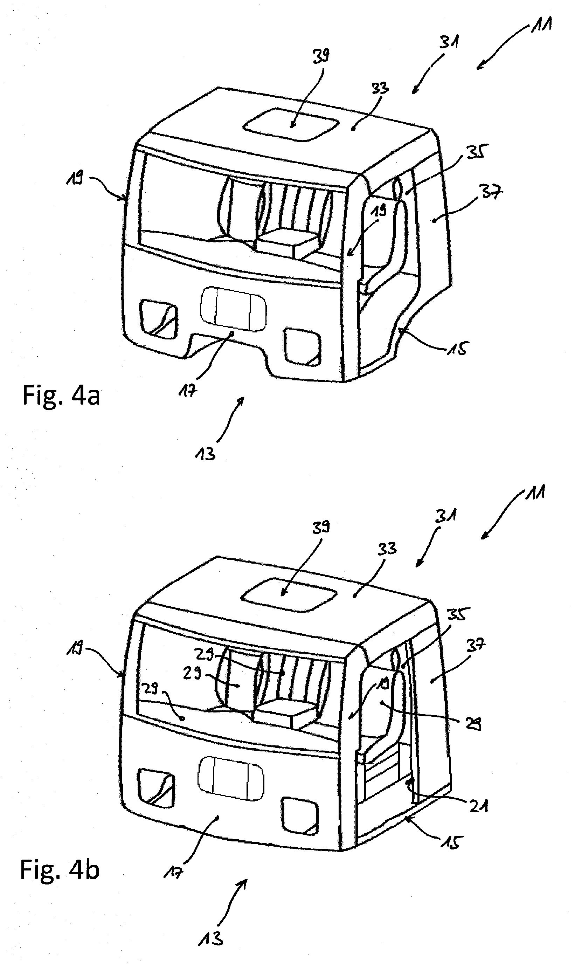

Tragmodule 13, wie die in Fig. 1a, 1b, 2a und 2b gezeigten, und Dachmodule 31, wie die in Fig. 3a bis 3f gezeigten, stellen separate Baueinheiten dar, die jeweils unabhängig voneinander vormontiert werden, d.h. die verschiedenen Abschnitte und Elemente eines jeweiligen Moduls 13, 31 werden fest miteinander verbunden. Danach werden ein jeweiliges vormontiertes Tragmodul 13 und ein jeweiliges vormontiertes Dachmodul 31 aneinander befestigt, um somit ein Fahrerhaus 11, wie beispielsweise in Fig. 4a und 4b gezeigt, zu bilden.

In Fig. 4a und 4b sind zwei Ausführungsformen eines Fahrerhauses 11 gezeigt, das ein jeweiliges Tragmodul 13 und ein jeweiliges Dachmodul 31 umfasst, die aneinander befestigt sind. Die in Fig. 4a gezeigte Ausführungsform entspricht der Befestigung des Dachmoduls 31 aus Fig. 3a an dem Tragmodul 13 aus Fig. 1a. Das in Fig. 4b dargestellte Fahrerhaus 11 zeigt das Dachmodul 31 aus Fig. 3a an dem Tragmodul 13 aus Fig. 1b befestigt.

### Bezugszeichenliste

- 11:: Fahrerhaus
- 13:: Tragmodul
- 15:: Bodenabschnitt
- 17:: Vorderwandabschnitt
- 19:: A-Säule
- 21:: B-Säule
- 23:: vorderer Dachholm
- 25:: seitlicher Dachholm
- 27:: Rückwandergänzungsabschnitt
- 29:: erste Ausstattungselemente
- 31:: Dachmodul
- 33:: Dachabschnitt
- 35:: Rückwandabschnitt
- 37:: Seitenwandabschnitt
- 39:: zweite Ausstattungselemente
- 41:: Innenraumverkleidung

## Patentansprüche

1. Verfahren zum Herstellen eines Fahrerhauses (11) für ein Kraftfahrzeug, mit einem Tragmodul (13), dass die tragende Einheit eines Fahrerhauses darstellt, d.h. es bildet nach vorne und zu den Seiten eine auf einer Bodenplatte ruhende Fahrgastzelle aus, und einem Dachmodul (31);
wobei das Tragmodul (13) zumindest umfasst:
- einen Bodenabschnitt (15), der die Unterseite des Fahrerhauses bildet, mit einer Befestigungseinrichtung zum Befestigen des Tragmoduls (13) an einem Fahrgestell des Kraftfahrzeugs,
- einen mit dem Bodenabschnitt (15) verbundenen Vorderwandabschnitt (17), der im Wesentlichen vertikal ausgerichtet ist,
- zwei mit dem Vorderwandabschnitt (17) verbundene A-Säulen (19),
- einen mit den A-Säulen (19) verbundenen vorderen Dachholm (23),
- zwei mit dem Bodenabschnitt (15) verbundene B-Säulen (21), und
- zwei seitliche Dachholme (25), wobei jeder seitliche Dachholm (25) eine der A-Säulen (19) und eine der B-Säulen (21) miteinander verbindet;
wobei das Dachmodul (31) zumindest umfasst:
- einen Dachabschnitt (33), und
- einen mit dem Dachabschnitt (33) verbundenen Rückwandabschnitt (35);
und wobei das Tragmodul (13) und das Dachmodul (31) separate Baueinheiten bilden, die aneinander befestigbar sind und unabhängig voneinander vormontierbar sind, mit den Schritten:
- Vormontieren des Tragmoduls (13);
- Installieren von ersten Ausstattungselementen (29) an dem Tragmodul (13);
- Vormontieren des Dachmoduls (31);
- Installieren von zweiten Ausstattungselementen (39) an dem Dachmodul (31);
- danach Befestigen des Dachmoduls (31) an dem Tragmodul (13).

2. Verfahren nach Anspruch 1,
wobei die ersten Ausstattungselemente (29) zumindest einen Teil eines oder mehrerer der folgenden Elemente umfassen: eine Klimaanlage, eine Ventilation, eine Heizung, ein Armaturenbrett, eine Lenkung, Sitze und/oder einen Bodenbelag.

3. Verfahren nach einem der Ansprüche 1 und 2,
wobei die zweiten Ausstattungselemente (39) zumindest einen Teil eines oder mehrerer der folgenden Elemente umfassen: eine Dachluke, ein Bett, Beleuchtungselemente und/oder Ablageelemente.

4. Verfahren nach einem der Ansprüche 1 bis 3,
wobei das Tragmodul (13) vor dem Installieren der ersten Ausstattungselemente (29) mit einer Korrosionsschutzbehandlung, jedoch weder mit einer Decklackierung noch mit einer Dekorfolie versehen wird, und wobei das Dachmodul (31) vor dem Installieren der zweiten Ausstattungselemente (39) zumindest mit einer Korrosionsschutzbehandlung sowie einer Decklackierung und/oder Dekorfolie versehen wird.

5. Verfahren zum Herstellen eines Fahrerhauses (11) für ein Kraftfahrzeug nach einem der vorhergehenden Ansprüche wobei der Dachabschnitt (33) des Dachmoduls (31) an dem vorderen Dachholm (23) und den seitlichen Dachholmen (25) des Tragmoduls (13) befestigt wird, und wobei der Rückwandabschnitt (35) des Dachmoduls (31) an dem Bodenabschnitt (15) oder an einem mit dem Bodenabschnitt (15) verbundenen Rückwandergänzungsabschnitt (27) des Tragmoduls (13) befestigt wird.

6. Verfahren zum Herstellen eines Fahrerhauses (11) für ein Kraftfahrzeug nach einem der vorhergehenden Ansprüche, wobei das Dachmodul (31) ferner zwei Seitenwandabschnitte (37) umfasst, die mit dem Dachabschnitt (33) und dem Rückwandabschnitt (35) des Dachmoduls (31) verbunden werden, wobei jeder Seitenwandabschnitt (37) an einer der B-Säulen (21) und an dem Bodenabschnitt (15) des Tragmoduls (13) befestigt wird.

7. Verfahren zum Herstellen eines Fahrerhauses (11) für ein Kraftfahrzeug nach einem der vorhergehenden Ansprüche,
wobei das Tragmodul (13) mit Außenbauteilen versehen wird, die zumindest eine jeweilige Außenseite des Vorderwandabschnitts (17), der A-Säulen (19) und der B-Säulen (21) des Tragmoduls (13) verdecken.

8. Verfahren zum Herstellen eines Fahrerhauses (11) für ein Kraftfahrzeug nach einem der vorhergehenden Ansprüche,
wobei der Dachabschnitt (33) und/oder der Rückwandabschnitt (35) des Dachmoduls (31) eine Innenschicht, eine Außenschicht und einen zwischen der Innenschicht und der Außenschicht angeordneten Kern umfasst.

9. Verfahren zum Herstellen eines Fahrerhauses (11) für ein Kraftfahrzeug nach einem der vorhergehenden Ansprüche,
wobei das Dachmodul (31) eine Innenraumverkleidung (41) aufweist, die an einer Innenseite des Dachmoduls (31) fest mit Dachmodul (31) verbunden wird.

## Claims

1. Method of manufacturing a driver's cab (11) for a vehicle, having a support module (13) which constitutes the support unit of a driver's cab, i.e. it forms to the front and to the sides a passenger cell resting on a floor panel, and having a roof module (31);
wherein the support module (13) at least comprises:
- a floor portion (15) which forms the underside of the driver's cab, having a fastening device for fastening the support module (13) to a chassis of the vehicle,
- a front wall portion (17) which is connected to the floor portion (15) and which is oriented substantially vertically,
- two A pillars (19) connected to the front wall portion (17),
- a front roof rail (23) connected to the A pillars (19),
- two B pillars (21) connected to the floor portion (15), and
- two lateral roof rails (25), wherein each lateral roof rail (25) interconnects one of the A pillars (19) and one of the B pillars (21);
wherein the roof module (31) at least comprises:
- a roof portion (33),
- a rear wall portion (35) connected to the roof portion (33);
and wherein the support module (13) and the roof module (31) form separate structural units which can be fastened to one another and can be preassembled independently of one another, comprising the following steps:
- preassembling the support module (13);
- installing first equipment elements (29) on the support module (13);
- preassembling the roof module (31);
- installing second equipment elements (39) on the roof module (31);
- then fastening the roof module (31) to the support module (13).

2. Method according to Claim 1,
wherein the first equipment elements (29) comprise at least part of one or more of the following elements: an air-conditioning system, a ventilation system, a heater, a dashboard, a steering system, seats and/or a floor covering.

3. Method according to either of Claims 1 and 2,
wherein the second equipment elements (39) comprise at least part of one or more of the following elements: a roof hatch, a bed, lighting elements and/or storage elements.

4. Method according to one of Claims 1 to 3,
wherein, prior to installing the first equipment elements (29), the support module (13) is provided with a corrosion protection treatment, but neither with a topcoat application nor with a decorative film, and wherein, prior to installing the second equipment elements (39), the roof module (31) is provided at least with a corrosion protection treatment and with a topcoat application and/or decorative film.

5. Method of manufacturing a driver's cab (11) for a vehicle according to one of the preceding claims, wherein the roof portion (33) of the roof module (31) is fastened to the front roof rail (23) and the lateral roof rails (25) of the support module (13), and wherein the rear wall portion (35) of the roof module (31) is fastened to the floor portion (15) or to a rear wall addition portion (27) of the support module (13) that is connected to the floor portion (15).

6. Method of manufacturing a driver's cab (11) for a vehicle according to one of the preceding claims, wherein the roof module (31) further comprises two side wall portions (37) which are connected to the roof portion (33) and to the rear wall portion (35) of the roof module (31), wherein each side wall portion (37) is fastened to one of the B pillars (21) and to the floor portion (15) of the support module (13).

7. Method of manufacturing a driver's cab (11) for a vehicle according to one of the preceding claims, wherein the support module (13) is provided with external structural parts which conceal at least a respective outer side of the front wall portion (17), of the A pillars (19) and of the B pillars (21) of the support module (13).

8. Method of manufacturing a driver's cab (11) for a vehicle according to one of the preceding claims, wherein the roof portion (33) and/or the rear wall portion (35) of the roof module (31) comprise/comprises an inner layer, an outer layer and a core arranged between the inner layer and the outer layer.

9. Method of manufacturing a driver's cab (11) for a vehicle according to one of the preceding claims, wherein the roof module (31) has an interior lining (41) which is fixedly connected to the roof module (31) on an inner side of the roof module (31).

## Revendications

1. Procédé de fabrication d'une cabine de conduite (11) pour un véhicule, munie d'un module porteur (13), qui constitue l'unité portante d'une cabine de conduite, c.-à-d. qu'il forme à l'avant et sur les côtés un habitable reposant sur une plaque de sol, et d'un module de toit (31) ;
le module porteur (13) comprenant au moins :
- une section de sol (15), qui forme le côté inférieur de la cabine de conduite, munie d'un dispositif de fixation pour la fixation du module porteur (13) sur un châssis du véhicule,
- une section de paroi avant (17) reliée avec la section de sol (15), qui est orientée essentiellement verticalement,
- deux colonnes A (19) reliées avec la section de paroi avant (17),
- un longeron de toit avant (23) relié avec les colonnes A (19),
- deux colonnes B (21) reliées avec la section de sol (15), et
- deux longerons de toit latéraux (25), chaque longeron de toit latéral (25) reliant une des colonnes A (19) et une des colonnes (B) l'une avec l'autre ;
le module de toit (21) comprenant au moins :
- une section de toit (33), et
- une section de paroi arrière (35) reliée avec la section de toit (33) ;
et le module porteur (13) et le module de toit (31) formant des unités de construction séparées, qui peuvent être fixées l'une à l'autre et peuvent être prémontées indépendamment l'une de l'autre, comprenant les étapes suivantes :
- le prémontage du module porteur (13) ;
- l'installation de premiers éléments d'équipement (29) sur le module porteur (13) ;
- le prémontage du module de toit (31) ;
- l'installation de deuxièmes éléments d'équipement (39) sur le module de toit (31) ;
- puis la fixation du module de toit (31) sur le module porteur (13).

2. Procédé selon la revendication 1, dans lequel les premiers éléments d'équipement (29) comprennent au moins une partie d'un ou de plusieurs des éléments suivants : une unité de climatisation, une ventilation, un chauffage, une planche de bord, un dispositif de direction, des sièges et/ou un revêtement de sol.

3. Procédé selon l'une quelconque des revendications 1 et 2, dans lequel les deuxièmes éléments d'équipement (39) comprennent au moins une partie d'un ou de plusieurs des éléments suivants : une trappe de toit, une couchette, des éléments d'éclairage et/ou des éléments de rangement.

4. Procédé selon l'une quelconque des revendications 1 à 3, dans lequel, avant l'installation des premiers éléments d'équipement (29), le module porteur (13) est muni d'un traitement anticorrosion, mais toutefois ni d'un vernissage de recouvrement, ni d'un film décoratif, et dans lequel, avant l'installation des deuxièmes éléments d'équipement (39), le module de toit (31) est muni d'au moins un traitement anticorrosion, ainsi que d'un vernissage de recouvrement et/ou d'un film décoratif.

5. Procédé de fabrication d'une cabine de conduite (11) pour un véhicule selon l'une quelconque des revendications précédentes, dans lequel la section de toit (33) du module de toit (31) est fixée sur le longeron de toit avant (23) et les longerons de toit latéraux (25) du module porteur (13), et dans lequel la section de paroi arrière (35) du module de toit (31) est fixée sur la section de sol (15) ou sur une section de complément de paroi arrière (27) reliée avec la section de sol (15) du module porteur (13).

6. Procédé de fabrication d'une cabine de conduite (11) pour un véhicule selon l'une quelconque des revendications précédentes, dans lequel le module de toit (31) comprend en outre deux sections de paroi latérale (37), qui sont reliées avec la section de toit (33) et la section de paroi arrière (35) du module de toit (31), chaque section de paroi latérale (37) étant fixée sur une des colonnes B (21) et sur la section de sol (15) du module porteur (13).

7. Procédé de fabrication d'une cabine de conduite (11) pour un véhicule selon l'une quelconque des revendications précédentes, dans lequel le module porteur (13) est muni de composants extérieurs, qui recouvrent au moins un côté extérieur respectif de la section de paroi avant (17), des colonnes A (19) et des colonnes B (21) du module porteur (13).

8. Procédé de fabrication d'une cabine de conduite (11) pour un véhicule selon l'une quelconque des revendications précédentes, dans lequel la section de toit (33) et/ou la section de paroi arrière (35) du module de toit (31) comprennent une couche intérieure, une couche extérieure et un noyau agencé entre la couche intérieure et la couche extérieure.

9. Procédé de fabrication d'une cabine de conduite (11) pour un véhicule selon l'une quelconque des revendications précédentes, dans lequel le module de toit (31) comprend un habillage d'espace intérieur (41), qui est relié solidement avec le module de toit (31) sur un côté intérieur du module de toit (31).
